(19) Europäisches Patentamt
European Patent Office
Office européen des brevets

(11) **EP 4 108 315 A1**

(12) **EUROPEAN PATENT APPLICATION**

(43) Date of publication:
**28.12.2022 Bulletin 2022/52**

(21) Application number: **22179946.3**

(22) Date of filing: **20.06.2022**

(51) International Patent Classification (IPC):
***B01D 53/22*** *(2006.01)*

(52) Cooperative Patent Classification (CPC):
**B01D 53/228;** B01D 2053/221; B01D 2256/10;
B01D 2257/104; B01D 2259/4566

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2021 US 202117353574**

(71) Applicant: **Air Products and Chemicals, Inc.**
**Allentown, PA 18106-5500 (US)**

(72) Inventors:
• **HAUGLAND, Christer**
  **4639 Kristiansand (NO)**
• **HOLMER, Rune**
  **4634 Kristiansand (NO)**
• **ANGEL, Hallgeir**
  **4625 Kristiansand (NO)**

(74) Representative: **Beck Greener LLP**
**Fulwood House**
**12 Fulwood Place**
**London WC1V 6HR (GB)**

(54) **REDUCING ENERGY CONSUMPTION FOR MARINE AND OFFSHORE MEMBRANE APPLICATIONS**

(57)    Disclosed herein are membrane-based onboard gas separation methods and systems, and in particular membrane-based onboard air separation methods and systems for ships and offshore installations, in which a vacuum is applied on the permeate side of the membrane separator unit in order to reduce the energy consumption of the process.

Figure 2

**Description**

BACKGROUND

The present invention relates to onboard gas separation methods and systems for marine applications, namely onboard ships and offshore installations. In particular, disclosed herein are membrane-based methods and systems for separating an air feed stream to produce a nitrogen-enriched product onboard a ship or offshore installation.

Membrane air separation systems onboard ships and offshore installations are usually energy intensive processes with high membrane feed compression to achieve an effective and competitive process. A membrane process separates a gaseous feed stream into a permeate stream and retentate stream; the gases that permeate across the membrane forming the permeate stream and the non-permeating gases forming the retentate stream. In air separation, a membrane that is more permeable to oxygen than nitrogen is typically used, such that the air feed stream is separated into a nitrogen-enriched stream (the retentate stream) that is removed from the feed side of the membrane and an oxygen-enriched stream (the permeate stream) that is removed from the permeate side of the membrane. The partial pressure differential between the feed and permeate sides of the membrane, and hence between the feed stream entering the membrane separator unit and the permeate stream exiting said module, is the driving force for the separation.

A membrane air separation system for marine applications will typically only compress the feed air to achieve the nitrogen flow and purity required.

US Patent No. 8,317,899 discloses an exemplary prior art process and system for membrane based air separation onboard a ship. In the disclosed process and system, an ambient temperature air feed stream is compressed in an onboard compressor to form a compressed air stream. The compressed air stream is cooled by heat exchange with sea water in the vicinity of the vessel, and dried in a dehydration unit. Some of the product of the dehydration module can be taken for use as utility air. The remainder of the compressed and dried air stream is passed through a membrane separator unit which includes a polymeric membrane for separating oxygen from nitrogen, so as to provide a nitrogen-enriched product stream which is used as an inert gas on the vessel, and an oxygen-enriched stream that is vented to atmosphere. The compressor is the only mechanically moving component of the system.

Membrane based methods and systems for air separation have also been used in various other applications and fields. In certain applications, in addition to compressing the feed air stream, a vacuum pump has also been employed to reduce the pressure on the permeate side of the membrane. For example:

US Patent No. US 5,730,780 discloses a process for generating nitrogen from air in which a vacuum is applied on the permeate side of the gas separation membrane in order to provide enhanced flow rates of the nitrogen product at nitrogen purity levels sufficient to allow the nitrogen product to be used in oil and gas pipeline repair and in grain silos. Vacuum pressures in the range of 3.4-13.2 psia (0.23-0.81 bara) were tested, with significant improvements in productivity (i.e. flow rate of the nitrogen product) being obtained at the lowest vacuum pressures tested in comparison to the highest vacuum pressures tested.

Published US Application No. US2019/282951 discloses a fuel tank inerting system for aircraft. The disclosed fuel tank inerting system includes a feed air compressor, an air separation module with an oxygen permeable membrane, and a variable vacuum source that provides an adjustable vacuum to the permeate side of the oxygen permeable membrane in the air separation module. The variable vacuum source is controlled so as to provide a pressure differential across the membrane such that a desired purity of the nitrogen-enriched air is produced. The use of a variable vacuum in particular allows the system to adjust the pressure differential across the membrane as required by flight phase. For instance, during descent a large flow of inert gas is required to inert the fuel tanks in order to counteract the inrush of outside air into fuel tank vents as the pressure inside the fuel tanks equilibrates. By directing the variable vacuum source to provide a greater vacuum and larger pressure differential across the air separation membrane, a high purity nitrogen stream can be produced more quickly than at the top of descent to compensate for the greater requirement for inert gas during the descent.

However, the use of a vacuum pump in air separation systems (and gas separation systems in general) comes with drawbacks. In particular, adding a vacuum pump increases both the capital cost and footprint of the system. In marine applications capital cost is an important consideration, and the available space onboard the ship or offshore installations is limited.

With increasing climate awareness, the desire to reduce energy consumption of these processes also increases.

BRIEF SUMMARY

The present inventors have now found that, by applying vacuum on the permeate side of the membrane separator unit, the energy consumption of membrane air separation systems for marine and offshore applications can be significantly reduced, to an extent that outweighs any disadvantages associated with the increased capital cost and footprint of adding a vacuum pump. In the methods and systems disclosed herein, by applying vacuum on the permeate side of the membrane separator unit, a lower feed pressure can then be utilized in order to significantly reduce the energy required to produce the same product flow rate and purity. This, in turn, reduces the operating costs of the system, as well as reducing the amount of environmentally unfriendly byproducts of the process, such as the amount of $CO_2$ production associated with running the feed compressor.

Several preferred aspects of the systems and methods according to the present invention are outlined below.

Aspect 1: A gas separation method carried out onboard a ship or offshore installation, the ship or offshore installation having a compressor, a membrane separator unit, and a vacuum pump that are all located onboard the ship or offshore installation, the membrane separator unit having a feed side and a permeate side separated by a membrane that is more permeable to a first gas than a second gas, the method comprising:

(a) compressing a gaseous feed stream comprising the first gas and the second gas in the compressor to form a compressed feed stream;
(b) applying a vacuum to the permeate side of the membrane separator unit using the vacuum pump; and
(c) introducing the compressed feed stream into the feed side of the membrane separator unit and separating the compressed feed stream into a permeate stream enriched in the first gas and a retentate stream enriched in the second gas, the permeate stream being withdrawn from the permeate side of the membrane separator unit through the vacuum pump and the retentate stream being withdrawn from the feed side of the membrane separator unit.

Aspect 2: The method of Aspect 1, wherein the method is an air separation method, the gaseous feed stream is an air stream, the first gas is oxygen, and the second gas is nitrogen.

Aspect 3: The method of Aspect 2, wherein the retentate stream has a nitrogen concentration of 95 vol% or greater.

Aspect 4: The method of any one of Aspects 1 to 3, wherein the pressure of the permeate stream exiting the permeate side of the membrane separator unit is from 0.5 to 0.7 bara.

Aspect 5: The method of any one of Aspects 1 to 4, wherein the pressure of the compressed feed stream entering the feed side of the membrane separator unit is greater than 1 bara and equal to or less than 15 bara.

Aspect 6: The method of any one of Apsects 1 to 5, wherein the pressure of the compressed feed stream entering the feed side of the membrane separator unit is from 4 to 8 bara.

Aspect 7: The method of any one of Aspects 1 to 6, wherein the pressure ratio of the pressure of compressed feed stream entering the feed side of the membrane separator unit to the pressure of the permeate stream exiting the permeate side of the membrane separator unit is from 8 to 12.

Aspect 8: A gas separation system located onboard a ship or offshore installation, the gas separation system comprising a compressor, a membrane separator unit, and a vacuum pump, the membrane separator unit having a feed side and a permeate side separated by a membrane that is more permeable to a first gas than a second gas, wherein:

the compressor is in fluid flow communication with the feed side of the membrane separator unit, and is configured to compress a gaseous feed stream to form a compressed feed stream and supply the compressed feed stream to the feed side of the membrane separator unit;
the vacuum pump is in fluid flow communication with the permeate side of the membrane separator unit and is configured to apply a vacuum to the permeate side of the membrane separator unit; and
the membrane separator unit is configured to separate the compressed feed stream into a retentate stream that is withdrawn from the feed side of the membrane separator unit and a permeate stream that is withdrawn from the permeate side of the membrane separator unit through the vacuum pump.

Aspect 9: The gas separation system of Aspect 8, wherein the system is an air separation system, the gaseous feed stream is an air stream, the first gas is oxygen, and the second gas is nitrogen.

Aspect 10: The gas separation system of Aspect 8 or 9, wherein the system is configured to maintain the pressure of the permeate stream exiting the permeate side of the membrane separator unit at a pressure of from 0.5 to 0.7 bara.

Aspect 11: The gas separation system of any one of Aspects 8 to 10, wherein the system is configured to maintain the pressure of the compressed feed stream entering the feed side of the membrane separator unit at a pressure of greater than 1 bara and equal to or less than 15 bara.

Aspect 12: The gas separation system of any one of Aspects 8 to 11, wherein the system is configured to maintain the pressure of the compressed feed stream entering the feed side of the membrane separator unit at a pressure of from 4 to 8 bara.

Aspect 13: The gas separation system of any one of Aspects 8 to 12, wherein the system is configured to maintain the pressure ratio of the pressure of compressed feed stream entering the feed side of the membrane separator unit to the pressure of the permeate stream exiting the permeate side of the membrane separator unit at a pressure ratio of from 8 to 12.

BRIEF DESCRIPTION OF THE DRAWINGS

Figure 1 is a schematic depicting a prior art membrane-based air separation method and system for marine applications.

Figure 2 is a schematic depicting a membrane based air separation method and system for marine applications, in accordance with one embodiment of the present invention.

Figure 3 is a graph depicting the calculated optimal feed and permeate pressures (in terms of providing the lowest specific nitrogen cost under the conditions simulated) at various electricity costs.

DETAILED DESCRIPTION

As used herein and unless otherwise indicated, the articles "a" and "an" mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

Where letters are used herein to identify recited steps of a method (e.g. (a), (b), and (c)), these letters are used solely to aid in referring to the method steps and are not intended to indicate a specific order in which claimed steps are performed, unless and only to the extent that such order is specifically recited.

Where used herein to identify recited features of a method or system, the terms "first," "second," "third," and so on, are used solely to aid in referring to and distinguishing between the features in question, and are not intended to indicate any specific order of the features, unless and only to the extent that such order is specifically recited.

As used herein, reference to a product stream from a gas separation process being "enriched" in a particular gas or component means that the stream has a higher mole % of said particular gas or component than the feed stream to the gas separation process. Thus, where a gaseous feed stream comprising a first gas and a second gas is being separated via a membrane separation process to provide a retentate stream enriched in the second gas, the retentate stream has a higher mole % of the second gas than the gaseous feed stream. Where said feed stream is a feed air stream and the retentate stream is a nitrogen-enriched product stream, the nitrogen-enriched product stream therefore has a higher mole % of nitrogen than the feed air stream.

As used herein, the term "fluid flow communication" refers to the nature of connectivity between two or more components that enables liquids, vapors, and/or two-phase mixtures to be transported between the components in a controlled fashion (i.e., without leakage) either directly or indirectly. Coupling two or more components such that they are in fluid flow communication with each other can involve any suitable method known in the art, such as with the use of welds, flanged conduits, gaskets, and bolts. Two or more components may also be coupled together via other components of the system that may separate them, for example, valves, gates, or other devices that may selectively restrict or direct fluid flow. As used herein, the term "conduit" refers to one or more structures through which fluids can be transported between two or more components of a system. For example, conduits can include pipes, ducts, passageways, and combinations thereof that transport liquids, vapors, and/or gases.

Described herein are gas separation methods and systems, and in particular methods and systems for separating air onboard ships and offshore installations comprising a membrane separator unit supplied with a compressed feed stream (compressed air stream in the case of air separation) by an onboard compressor. These methods and systems further comprise an onboard vacuum pump being used to apply a vacuum to the permeate side of the membrane separator unit in order to reduce the total energy consumption of the process as compared to the amount of energy that would be required to produce the same desired product stream (e.g. a nitrogen-enriched product stream in the case of an air separation process) at the same flow rate and purity using only the compressor with no vacuum being applied to the permeate side of the membrane separator unit.

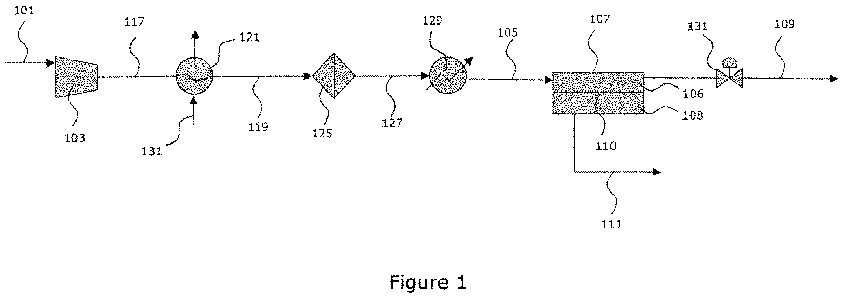

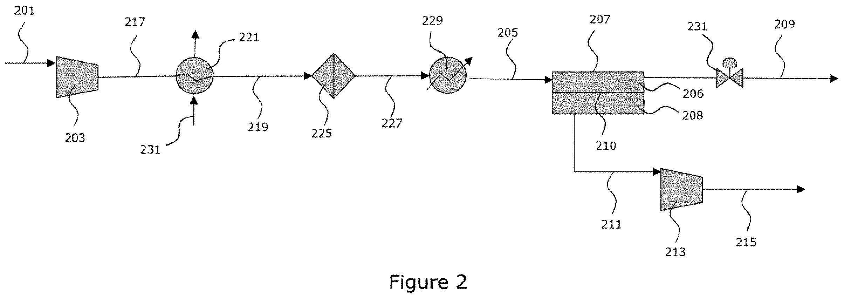

Solely by way of example, various exemplary embodiments of the invention will now be described with reference to the Figures. In the Figures, where a feature is common to more than one Figure that feature has been assigned the same reference numeral differing by a factor of 100. Thus, for example, membrane separator unit 107 in Figure 1 corresponds to membrane separator unit 207 in Figure 2. Unless a feature is specifically described as being different from other embodiments in which it is shown in the drawings, that feature can be assumed to have the same structure and function as the corresponding feature in the embodiment in which it is described. Moreover, if that feature does not have a different structure or function in a subsequently-described embodiment, it may not be specifically referred to in the specification.

Referring now to Figure 1, a schematic of a prior art membrane-based air separation system and method, as typically used onboard ships and offshore installations, is shown. A feed air stream 101 is compressed in an onboard compressor 103 to form a compressed feed air stream 117, 105 at a pressure of, typically, 9 to 15 bara. The outlet of the onboard compressor 103 is in fluid flow communication with an onboard membrane separator unit 107 such that the compressed feed air stream 117, 105 from the compressor 103 is fed into said onboard membrane separator unit 107. Preferably, the compressed air stream 117 exiting the compressor 103 is first cooled in a heat exchanger 121 to form a cooled compressed feed stream 119 that is passed through a filter 125 to remove any particulates, oil droplets, and condensed water from the stream. The filtered compressed feed stream 127 is then warmed in a process heater 129 to a stable operating temperature and introduced into the membrane separator unit 107. The compressed air stream may be cooled in heat exchanger 121 via indirect heat exchange with any suitable coolant 131, such as for example air, fresh water, or sea water. The feed air stream 105 exiting the process heater 129 and entering the membrane separator unit 107 is typically at a temperature of 30 to 60 °C.

The membrane separator unit 107 comprises a feed side 106 and a permeate side 108 separated by a membrane 110 that is more permeable to oxygen than nitrogen. The membrane separator unit may be composed of one or more modules, arranged in series or parallel, and in each module the membrane may take any suitable form, such as a bundle of hollow fibers or one or more flat or spiral wound sheets, as is well known in the art.

The compressed feed air stream 105 enters into the membrane separator unit 107 on the feed side (high pressure side) 106 of the module and, as noted above, is typically at a pressure of 9 to 15 bara as it enters the membrane separator unit. The permeate side (low pressure side) 108 of the module is at atmospheric pressure, i.e. 1 bara, resulting in a pressure differential between the retentate 106 and permeate 108 sides that drives the transfer of gas across the membrane 110 from the high pressure side 106 to the low pressure side 108. As the membrane 110 is more permeable to oxygen then nitrogen, the oxygen in the compressed feed air stream 105 passes through the membrane more rapidly than the nitrogen does, and consequently as the compressed feed air stream passes through the membrane separator unit 107 it is separated into a retentate stream 109 enriched in nitrogen, which is retained and withdrawn from the feed side 106 of the membrane separator unit 107, and a permeate stream 111 enriched in oxygen, which forms and is withdrawn from the permeate side 108 of the membrane separator unit 107. Fine control of the nitrogen purity of the retentate stream 109 is typically achieved by controlling the flow rate of the retentate stream 109 by using a control valve 131, the flow rate set point of the control valve being regulated by the nitrogen purity of the retentate stream 109.

Typically, the nitrogen-enriched retentate stream that is produced and withdrawn from the membrane separator unit will comprise 95-99% by volume (i.e. 95-99 vol%) nitrogen, in order to provide a high purity nitrogen product as required by the marine application in question. In conjunction with appropriate design of the membrane separator unit (including choice of type, thickness and surface area of membrane) and the temperature of the feed stream and membrane, it is this required purity of the nitrogen product and the required flow rate of the nitrogen product which dictates the pressure to which the feed air stream must be compressed (in order to provide the pressure differential and hence driving force needed to form a retentate stream having the desired product purity at the desired flow rate). The design of membrane separator units suitable for producing a retentate stream at a desired flow rate and purity, based on the pressure, composition, temperature, and flow rate of the compressed feed stream, is well within the ability of the person of ordinary skill in this art.

Turning now to Figure 2, a schematic of a membrane-based air separation system and method for use onboard ships and offshore installations in accordance with an embodiment of the present invention is shown. This differs from the prior art system and method of Figure 1 in that an onboard vacuum pump 213 is provided, the inlet of the vacuum pump being in fluid flow communication with permeate side 208 of the membrane separator unit 207. The vacuum pump 213 used to apply a vacuum to the permeate side 208 of the membrane separator unit 207, such that the pressure of the permeate stream exiting the permeate side 208 of the membrane separator unit 207 is below atmospheric pressure (below 1 bara), and more preferably is in the range of 0.5-0.7 bara.

By lowering the pressure on the permeate side of the membrane separator unit, the pressure to which the feed stream is compressed can also be lowered whilst still maintaining the pressure differential across the membrane 206 and hence the driving force necessary to produce a nitrogen-enriched retentate stream 209 having the desired purity (i.e. typically a nitrogen-enriched retentate stream comprising 95-99 vol% nitrogen, as discussed above). Thus, in the embodiment shown in Figure 2 the pressure of the compressed feed stream 217, 205 will be lower than the pressure of the compressed feed stream 117, 105 of Figure 1 (assuming the compositions and flow rates of the feed air streams 201/101 are the same, the compositions and flow rates of the nitrogen-enriched retentate streams 209/109 are the same, and the design of the membrane separator units 207/107 are the same). In the embodiment shown in Figure 2, the compressed feed stream 205 entering the feed side 206 of the membrane separator unit typically has a pressure of equal to or less than 15 bara (but greater than 1 bara), and more preferably has a pressure of 4 to 8 bara. It has been found that, surprisingly, the net energy consumption of the process is significantly reduced when using a vacuum pump to apply a vacuum to the permeate side of the membrane separator unit and then lowering accordingly the pressure to which the feed air stream is compressed, compared to relying on compression alone to achieve the higher pressure of the feed stream needed to provide all the driving force for separation. This reduction in energy consumption is sufficient to outweigh the capital cost of adding a vacuum pump and thereby reduces the specific nitrogen cost of the process.

Accordingly, as shown in Figure 2, feed air stream 201 is compressed in onboard compressor 203 to form a compressed feed air stream 217, 205 which (preferably after being cooled in heat exchanger 221, filtered in filter 225, and then warmed in process heater 229 in the manner discussed above with reference to Figure 1) is introduced into the feed side 206 of membrane separator unit 207, typically at a pressure of equal to or less than 15 bara (but greater than 1 bara), and more preferably at a pressre of 4 to 8 bara.

Membrane separator unit 207 includes a membrane 210 that is more permeable to oxygen than nitrogen. In Figure 2, the membrane separator unit is depicted as consisting of a single module, but in many embodiments the membrane separator unit may be composed of more than one module arranged in series or parallel (in order to be able to adequately handle the flow rate of the feed air stream that is being separated). Such modules may be connected with manifolds, and each module may be equipped with individual valves, which may allow individual modules to be independently activated or de-activated. In the or each module of the membrane separator unit the membrane may take any suitable form, such as a bundle of hollow fibers or one or more flat or spiral wound sheets. The fibers or sheets can all be made from the same polymer or same composite of polymers, or some fibers or sheets can be made from different polymers or composites of polymers such that a mix of different polymers or composites of polymers are used. Various different types of polymers suitable for forming a membrane that is more permeable to oxygen than nitrogen are well known, and suitable polymers can be selected by the skilled person without difficulty. The fibers or sheets used in different modules can all have the same permeability and selectivity, or fibers or sheets having different permeability and/or selectivity can be used in different modules.

Vacuum pump 213 is used to apply a vacuum to the permeate side 208 of the membrane separator unit 207, such that the pressure of the permeate stream exiting the permeate side of the membrane separator unit is below atmospheric pressure (below 1 bara), and more preferably is 0.5-0.7 bara. The compressed feed air stream 205 entering into the membrane separator unit 207 is separated into a retentate stream 209 enriched in nitrogen that is retained and withdrawn from the feed side 206 of the membrane separator unit 207, and a permeate stream 211 enriched in oxygen that forms on the permeate side 208 of the membrane separator unit 207 and is withdrawn through the vacuum pump 213, exiting the vacuum pump as a stream 215 at atmospheric pressure. The nitrogen-enriched retentate stream 209 has a composition, typically 95-99 vol% nitrogen, as required by the marine application in question in order to serve as a high purity nitrogen product. Fine control of the nitrogen purity of the retentate stream 209 can be achieved by controlling the flow rate of said stream using a control valve 231, the flow rate set point of the control valve being regulated by the nitrogen purity of the stream 209.

The pressure of compressed feed stream 205 entering the feed side 206 of the membrane separator unit and the pressure of the permeate stream 211 exiting the permeate side 208 of the membrane separator unit are preferably such that the pressure ratio of the compressed feed stream to the permeate stream is from 8 to 12. Such a pressure ratio has been found to achieve the lowest specific nitrogen cost. This pressure of compressed feed stream 205 can, for example, be measured using a pressure sensor located at or near to the inlet to the feed side 206 of the membrane separator unit, and the pressure of the permeate stream 211 can, for example, be measured using a pressure sensor located at or near to the outlet from the permeate side 208 of the membrane separator unit (including suitably using a pressure sensor located at the inlet to the vacuum pump 213 if the distance between the membrane separator unit 207 and vacuum pump 213 is such that any pressure drop between the membrane separator unit and vacuum pump is negligible). The pressure of the compressed feed stream 205 can, for example, be automatically controlled via a suitable feedback loop between said pressure sensor measuring the pressure of said stream and the compressor 203. Likewise, the pressure of the permeate stream 211 can, for example, be automatically controlled via a suitable feedback loop between said pressure sensor measuring the pressure of said stream and the vacuum pump 213.

The compressor 203 and vacuum pump 213 can be of any suitable types known in the art. The compressor 203 may, for example, comprise one or more oil-lubricated screw type compressors and/or one or more oil-free (centrifugal) compressors. The vacuum pump may, for example, comprise one or more vacuum blowers (also known as side-channel blowers), which are capable of providing vacuum pressures down to about 0.5 bara at high volume flow rates.

Optionally, the vacuum pump 213 may be controlled so that it is not used continuously to apply a vacuum during operation of air separation system. For example, during periods of low $N_2$ demand, such that only a relatively low flow rate of the nitrogen-enriched retentate stream 209 is required, the vacuum pump could be shut down in order to achieve further savings in energy consumption. Alternatively or additionally, during periods of low $N_2$ demand the compressor 203 could be operated to reduce the extent to which the air feed stream 201 is compressed, thereby producing a compressed feed air stream 217, 205 that is at a lower pressure, which further decreases energy consumption during such periods (and which generally has more impact on energy consumption than turning off the vacuum pump).

Where the membrane separator unit comprises more than one module, a single vacuum pump may be used to apply a vacuum to all or some of the modules, or more than one vacuum pump may be used, each vacuum pump being connected to and applying a vacuum to one or more of the modules. Optionally, where the membrane separator unit comprises more than one module, only some of the modules may be connected to a vacuum pump and have a vacuum applied thereto.

Control of the disclosed air separation systems may be achieved via an automated control system, via manual (i.e. human) control, or any combination of the two.

Where not specifically described above, the skilled person will nevertheless understand that the disclosed air separation systems may also include various typical components included in such systems, such as but not limited to: inlet valve(s), inlet filtration systems, air drying systems, filters for organic vapor removal, pressure sensors, temperature sensors, air heater(s), valves controlling the applied number of membrane modules, outlet control valve(s), inlet control valves, and buffer tanks.

The methods and systems described above, and in particular the principle of applying a vacuum to the permeate side of a membrane separator unit in order to reduce the energy consumption of a gas separation process onboard ships and offshore installations, can also be applied to other gas separation processes, and are not limited to separation of nitrogen from oxygen. Other gases that can be separated by such gas separation processes include oxygen, hydrogen, water, carbon dioxide, methane and helium.

EXAMPLE 1

A method of air separation onboard a chemical tanker was simulated, using Air Products and Chemicals, Inc.'s built in membrane process model in Aspen Technologies' ASPEN Plus V10 simulation software. A method and system as depicted in Figure 2 were simulated, with the target nitrogen purity and flow rate of the nitrogen-enriched retentate stream 209 being set according to normal marine and offshore air separation specifications.

The process conditions and resulting compositions and flow rates of the various streams of the simulation are set out in Table 1 below. For the purposes of this simulation, only the nitrogen and oxygen content of the streams was considered, as although the feed air stream will typically contain minor amounts of other components (such as water, carbon dioxide and noble gases) the presence of such components in the feed air stream will have no impact on the ability of the process to separate oxygen from nitrogen.

Table 1

|  | Stream | **201** | **219** | **205** | **211** | **209** |
|---|---|---|---|---|---|---|
| Temperature | °C | 20.0 | 40.0 | 50.0 | 47.0 | 47.0 |
| Pressure | bara | 1.013 | 8 | 7.6 | 0.65 | 7.4 |
| Mole Flows | Nm3/h* | 9744 | 9744 | 9744 | 5244 | 4500 |
| Mole Fraction N2 |  | 0.7905 | 0.7905 | 0.7905 | 0.6536 | 0.9500 |
| Mole Fraction O2 |  | 0.2095 | 0.2095 | 0.2095 | 0.3464 | 0.0500 |
| *Normal conditions: 0 °C, 1.013 bara | | | | | | |

Using the simulated system and method, 9744 NMH (normal cubic meters per hour, i.e. cubic meters per hour under normal conditions) of feed air was compressed to 8.0 bara in compressor 203. The compressed feed air stream 205 was fed to the membrane separator unit 207 to generate 4500 NMH of nitrogen-enriched retentate gas at 95% nitrogen purity. The retentate gas flow rate was regulated, via control valve 231, in order to achieve the required product purity. The permeate stream was withdrawn via vacuum pump 213 operated with a suction pressure of 0.65 bara. The total power required by the process was 0.273 KW/NMH of nitrogen-enriched retentate gas .

By comparison, in order to produce 4500 NMH of nitrogen-enriched retentate gas at 95% nitrogen purity with the system and method of Figure 1 (i.e. without the use of the vacuum pump 213, and so with the permeate stream exiting the membrane separator unit at 1 bara), 9761 NMH of feed air stream had to be compressed to 11 bara, raising the total power required by the process to 0.3151 KW/NMH of nitrogen-enriched retentate gas.

The system and method in accordance with the embodiment of Figure 2 therefore resulted in a 13.4% decrease in required power for the same separation, in comparison to a system and process where no vacuum was used.

EXAMPLE 2

Further simulations of the method and system depicted in Figure 2 were carried out, using Air Products and Chemicals, Inc.'s built in membrane process model in Aspen Technologies' ASPEN Plus V10 simulation software, in order to establish the optimum feed stream and permerate stream pressures for minimizing the specific nitrogen cost of the process.

The following were taken as the base conditions for the simulation: the system would be operating for 800 hours per year, producing 4500 NMH of nitrogen-enriched retentate gas at 95% nitrogen purity, the system would have an operating lifetime of 20 years, the membranes in the mebrane module would have a lifetime of 10 years (therefore requiring replacement half way through the lifetime of the system), and the cost of energy would be 0.15 USD/kWh.

The specific nitrogen cost of the process was defined as follows:

$$\text{Specific N2 cost} = (\text{CAPEX} + \text{OPEX})/\text{N2 PRODUCED}$$

In which "CAPEX" refers to the total capital cost of the system over the whole lifetime of the system, "OPEX" refers to the total operating cost of the process over the whole lifetime of the process, and "N2 PRODUCED" refers to the toal amount of the nitrogen product (i.e. the nitrogen-enriched retentate gas at 95% nitrogen purity) over the whole lifetime of the process. In this calculation: the compressor cost was estimated using the typical vendor cost of a screw-type oil-lubricated compressor; the vacuum equipment was assumed to have the same price per kW used as oil-lubricated screw compressors; the cost of the nitrogen package was based on the major equipment cost (membranes+rotating equipment); the cost of other equipment on the nitorgen generator (filtration equipment, heater, valves, pipe) was assumed to be constant for all feed/permeate pressures for the levels of nitrogen production in question; and the maintenance cost only included the aforementioned need for membrane replacement.

It was found that the lowest specific nitrogen cost, of 0.0496 USD/NMH of nitrogen-enriched retentate gas, was obtained when using a feed stream 205 pressure of 5.64 bara and a permeate stream 211 pressure of 0.56 bara. Tables 2 and 3, below, provide the results obtained for these feed and permeate pressures and, for comparison, the results obtained when using various feed pressures but not using a vacuum pump (and thus using a permeate stream at atmospheric pressure). As can be seen, by using the optimized feed and permeate pressures of, respectively, 5.64 bara and 0.56, it was possible to reduce the specific N2 cost of the process by over 10% as compared to the standard conditions (feed stream pressure of 11 bara and permeate stream at atmospheric pressure) used for onboard nitrogen production.

Table 2

| Case | Feed pressure [bara] | Permeate pressure [bara] | Specific power [kW/Nm3 pr. hour N21 | Specific N2 cost [USD/Nm3 pr. hour N21 |
|---|---|---|---|---|
| 1) Vacuum | 5.64 | 0.56 | 0.2399 | 0.0496 |
| LP feed [2] | 7.08 | 1.01 | 0.2578 | 0.0518 |
| LP feed 2 [3] | 5.64 | 1.01 | 0.2341 | 0.0533 |
| Standard [4] | 11.0 | 1.01 | 0.3151 | 0.0560 |

Table 3

| Case | Feed pressure [bara] | Permeate pressure [bara] | Specific power reduction (compared to 4) | Specifc N2 cost reduction (compared to 4) |
|---|---|---|---|---|
| 1) Vacuum | 5.64 | 0.56 | 23.9 % | 11.4 % |
| LP feed [2] | 7.08 | 1.01 | 18.2 % | 7.5 % |

(continued)

| Case | Feed pressure [bara] | Permeate pressure [bara] | Specific power reduction (compared to 4) | Specifc N2 cost reduction (compared to 4) |
|---|---|---|---|---|
| LP feed [3] | 5.64 | 1.01 | 25.7 % | 4.8 % |
| 1) Optimization performed to find min. specific N2 cost | | | | |
| 2) Optimization performed without allowing vacuum pressure on permeate. Manipulated variable is only feed pressure, permeate pressure set to amtospheric pressure. | | | | |
| 3) Using the optimal feed pressure from 1), but not allowing vacuum on permereate pressure. No optimization performed. | | | | |
| 4) Conventional feed/permeate pressure for shipboard nitrogen generator. | | | | |

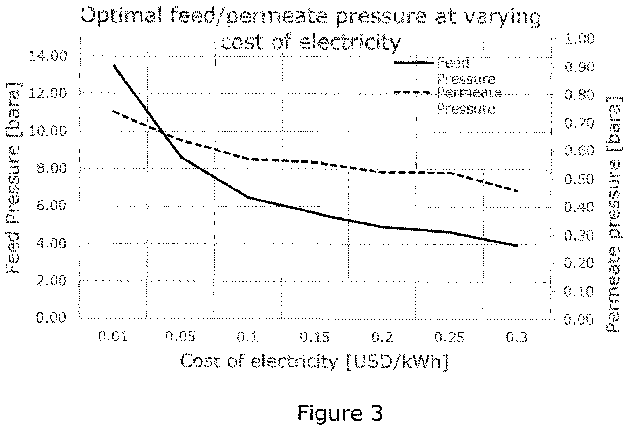

Additionally, the effects of varying the electricity cost (from the cost of 0.15 USD/kWh initially used for the simulation) were investigated, and the results are shown in Figure 3, in which the calculated optimum feed stream and permeate stream pressures (in terms of the pressures that provided the lowest specific nitrogen cost) are shown for various costs of electricity ranging from 0.01 USD/kWh to 0.30 USD/kWh. As can be seen, increasing the cost of electricity decreased the optimal feed and permeate pressures, but under all conditions investigated the lowest specific nitrogen costs were obtained using subatmospheric permeate pressures (and in particular permeate pressures in the region of 0.5-0.7 bara).

It will be appreciated that the invention is not restricted to the details described above with reference to the preferred embodiments but that numerous modifications and variations can be made without departing from the spirit or scope of the invention as defined in the following claims.

**Claims**

1. A gas separation method carried out onboard a ship or offshore installation, the ship or offshore installation comprising a compressor, a membrane separator unit, and a vacuum pump that are all located onboard the ship or offshore installation, the membrane separator unit comprising a feed side and a permeate side separated by a membrane that is more permeable to a first gas than a second gas, the method comprising:

   (a) compressing a gaseous feed stream comprising the first gas and the second gas in the compressor to form a compressed feed stream;
   (b) applying a vacuum to the permeate side of the membrane separator unit using the vacuum pump; and
   (c) introducing the compressed feed stream into the feed side of the membrane separator unit and separating the compressed feed stream into a permeate stream enriched in the first gas and a retentate stream enriched in the second gas, the permeate stream being withdrawn from the permeate side of the membrane separator unit through the vacuum pump and the retentate stream being withdrawn from the feed side of the membrane separator unit.

2. The method of claim 1, wherein the method is an air separation method, the gaseous feed stream comprises an air stream, the first gas comprises oxygen, and the second gas comprises nitrogen.

3. The method of claim 2, wherein the retentate stream has a nitrogen concentration of 95 vol% or greater.

4. The method of any preceding claim, wherein the pressure of the permeate stream exiting the permeate side of the membrane separator unit is from 0.5 to 0.7 bara.

5. The method of any preceding claim, wherein the pressure of the compressed feed stream entering the feed side of the membrane separator unit is greater than 1 bara and equal to or less than 15 bara.

6. The method of any preceding claim, wherein the pressure of the compressed feed stream entering the feed side of the membrane separator unit is from 4 to 8 bara.

7. The method of any preceding claim, wherein the pressure ratio of the pressure of compressed feed stream entering the feed side of the membrane separator unit to the pressure of the permeate stream exiting the permeate side of the membrane separator unit is from 8 to 12.

8.  A gas separation system located onboard a ship or offshore installation, the gas separation system comprising a compressor, a membrane separator unit, and a vacuum pump, the membrane separator unit comprising a feed side and a permeate side separated by a membrane that is more permeable to a first gas than a second gas, wherein:

    the compressor is in fluid flow communication with the feed side of the membrane separator unit, and is configured to compress a gaseous feed stream to form a compressed feed stream and supply the compressed feed stream to the feed side of the membrane separator unit;
    the vacuum pump is in fluid flow communication with the permeate side of the membrane separator unit and is configured to apply a vacuum to the permeate side of the membrane separator unit; and
    the membrane separator unit is configured to separate the compressed feed stream into a retentate stream that is withdrawn from the feed side of the membrane separator unit and a permeate stream that is withdrawn from the permeate side of the membrane separator unit through the vacuum pump.

9.  The gas separation system of claim 8, wherein the system is an air separation system, the gaseous feed stream comprises an air stream, the first gas comprises oxygen, and the second gas comprises nitrogen.

10. The gas separation system of claim 8 or 9, wherein the system is configured to maintain the pressure of the permeate stream exiting the permeate side of the membrane separator unit at a pressure of from 0.5 to 0.7 bara.

11. The gas separation system of any one of claims 8 to 10, wherein the system is configured to maintain the pressure of the compressed feed stream entering the feed side of the membrane separator unit at a pressure of greater than 1 bara and equal to or less than 15 bara.

12. The gas separation system of any one of claims 8 to 11, wherein the system is configured to maintain the pressure of the compressed feed stream entering the feed side of the membrane separator unit at a pressure of from 4 to 8 bara.

13. The gas separation system of any one of claims 8 to 12, wherein the system is configured to maintain the pressure ratio of the pressure of compressed feed stream entering the feed side of the membrane separator unit to the pressure of the permeate stream exiting the permeate side of the membrane separator unit at a pressure ratio of from 8 to 12.

101

103

117

131

121

119

125

127

129

105

107

106

108

110

111

131

109

Figure 1

Figure 2

Figure 3

EP 4 108 315 A1

# EUROPEAN SEARCH REPORT

Application Number

EP 22 17 9946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOZORG M ET AL: "Polymeric membrane materials for nitrogen production from air: A process synthesis study", CHEMICAL ENGINEERING SCIENCE, OXFORD, GB, vol. 207, 16 July 2019 (2019-07-16), pages 1196-1213, XP085766786, ISSN: 0009-2509, DOI: 10.1016/J.CES.2019.07.029 [retrieved on 2019-07-16] | 1-3,5-9, 11-13 | INV. B01D53/22 |
| Y | * see, in particular, figures 1 (item "downstream pressure 0.2 to 1 bar"), 4 and 5; see page 1203, left column , lines 4-6 and page 1199 left column, lines 3-6; see also table 1 "Cen = top. Wtot. Kel" and table 2 "top and Kel" * | 1-13 | |
| Y | WO 2005/063362 A1 (SMARTMEMBRANE CORP [BS]; MCNEIL JOHN [GB] ET AL.) 14 July 2005 (2005-07-14) * see, in particular, page 1, lines 5-13 and page 3, lines 25-30; see also page 4, lines 13-17 * | 1-13 | |
| A | OMID ASHRAFY ET AL: "EJECTOR INTEGRATION FOR THE COST EFFECTIVE DESIGN OF THE SELEXOL (TM) PROCESS", ENERGY, vol. 162, 8 August 2018 (2018-08-08), pages 380-392, XP002807677, DOI: doi.org/10.1016/j.energy.2018.08.053 * see, in particular, figures 1-11 and tables 1-9; see also points 2.3 Ejector; 3.2 Heat Integration and 4. Results and discussion. * | 1-13 | TECHNICAL FIELDS SEARCHED (IPC) B01D |

The present search report has been drawn up for all claims

| Place of search | Date of completion of the search | Examiner |
|---|---|---|
| Munich | 7 October 2022 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 22 17 9946

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2022

| Patent document cited in search report | | Publication date | Patent family member(s) | | Publication date |
|---|---|---|---|---|---|
| WO 2005063362 | A1 | 14-07-2005 | CA | 2551661 A1 | 14-07-2005 |
| | | | EP | 1699544 A1 | 13-09-2006 |
| | | | US | 2007157803 A1 | 12-07-2007 |
| | | | WO | 2005063362 A1 | 14-07-2005 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8317899 B
- US 5730780 A
- US 2019282951 A